# EUROPEAN PATENT APPLICATION

(11) **EP 1 493 629 A1**
(43) Date of publication of application: **05.01.2005**
(21) Application number: 04076836.8
(22) Date of filing: 24.06.2004
(51) Int. Cl.: B60R 13/02, F16B 5/06, F16B 7/04, F16B 21/18

(54) **Fastening element, arrangement and process for securing a panel**

(30) Priority: 02.07.2003 SE 0301971
(71) Applicant: ITW Fixfast AB, 431 53 Mölndal (SE)
(72) Inventor: Östergren, Kristian, 441 65 Alingsas (SE)
(74) Representative: Romare, Laila Anette

(57) **Abstract**

Fastening element for securing a panel to a vehicle door, wherein the fastening element comprises a first part (1), intended for fixing to the door or panel, having an axial direction and a transverse direction and an axially arranged cavity (5) and, connected to the cavity (5), a transversely arranged groove (6), a second part (11), intended for fixing to the door or panel, having an axial direction and a transverse direction and an axially protruding part for introduction axially into the cavity (5) in the first part (1), and a third part (17), having a resilient grip comprising two arms (18,19) for transverse introduction into the groove (6) in the first part (1), the third part (17) managing to lock the first part (1) in the second part (11).

## Description

### TECHNICAL FIELD

The invention relates to a fastening element for securing a panel to a vehicle door. The invention further relates to an arrangement and a process for securing a panel to a vehicle door.

### BACKGROUND ART

The securement of panels to vehicle doors conventionally consists of a large number of steps, several of which are manual. In modern vehicles there are many functions which are disposed in the vehicle door, for example door locks and window winders, inclusive of the electrical devices which are required for modern electrically operated windows. As the rate of vehicle production has increased, it has become desirable to seek to automate a number of steps so that these can be carried out faster and, if possible, by means of a robot.

In SE 502 936, it has been proposed to automate the securement of the door- locking mechanism. This was realized by disposing in the door or panel an activating arm which links the locking handle with the wire which opens the lock.

Yet the actual securement of the panel to the vehicle door continues to remain a complicated manual assembly process. In the moulding stage, the one part of the closing handle with which the vehicle door can be shut is arranged in the panel. The panel is then screwed manually to the door, after which the other part of the closing handle is normally fitted by snap-fastening. The screws which fix the panel to the door are thereby concealed. This process has several drawbacks. There are a number of manual steps which have to be carried out by a fitter. In addition, the door handle can sometimes split in two under the considerable stress applied to the handle as the door is closed.

A further problem with the conventional method arises in the removal and refitting of panels. It is common for panels to be removed and refitted where, for example, loud speakers or other electronics are retrofitted. The two-piece closing handle, which is usually joined together by snap-fastening, has to be prised apart for removal. It is common for damage to occur to either part of the closing handle during removal. This results in parts having to be replaced.

There therefore remain problems associated with the securement of panels to vehicle doors.

### DISCLOSURE OF INVENTION

The above problems are solved by virtue of the invention by the fastening element comprising a first part, intended for fixing to the door or panel, having an axial direction and a transverse direction and an axially arranged cavity and, connected to the cavity, a transversely arranged groove, a second part, intended for fixing to the door or panel, having an axial direction and a transverse direction and an axially protruding part for introduction axially into the cavity in the first part, and a third part, having a resilient grip comprising two arms for transverse introduction into the groove in the first part, the third part being a locking member which manages to lock the first part in the second part.

According to a preferred embodiment of the invention, the second bearing surface is bevelled in the contact surface against the third part and the third part also has a corresponding bevel for bearing contact against the second part so as to prevent play when these parts are stretched. By configuring those surfaces on the second and the third part which are to bear against one another with an angle deviating from the perpendicular in relation to the axial direction, the parts will be locked together even if material fatigue means. for example, that the grip on the third part gets stretched.

In order additionally or alternatively to reduce the risk of play between the parts, with consequent play between vehicle door and panel, according to one embodiment of the invention the third part of the fastening element is made of a plastics material with an embedded metal spring.

The invention also relates to an arrangement for use in securing a panel to a base, such as a vehicle door comprising a base, a panel and at least one fastening element according to the invention.

By base is here meant, apart from vehicle doors, all types of constructions which might be covered by a panel. Further examples are vehicle ceilings, pillars in a vehicle or components in the engine compartment. The fastening element can nevertheless be used, of course, to secure panels to bases which are not housed in vehicles.

By vehicle door is here meant any hatches belonging to vehicle, including doors to luggage compartments, so-called tailgates.

In order further to automate the assembly, according to one embodiment of the invention the arrangement comprises an interior opening handle for opening the door, which has been fitted on the panel prior to the fitting of the panel to the vehicle door, an activating arm having an engagement surface disposed in a recess, which activating arm is pivotably fixed to the closing handle, a locking mechanism, and a power-transmitting member having a first part which is in contact with the activating arm and a second part which is in contact with the locking mechanism for the transmission of motion from the handle to the locking mechanism, the power-transmitting member, in the region of the part which is connected to the door handle, having an engagement part, and a guide being provided for use in the connection to the closing handle, which guide, during the assembly, guides the power-transmitting member such that the engagement part is brought into line with the engagement surface in the recess. As a result of this arrangement, time-wasting manual fitting of the opening handle and its function is avoided. The process for automatic fitting of the opening handle is described in greater detail in SE 502 936.

Vehicle doors have closing handles with which the passenger shuts the door. The closing handles are usually configured as a bow or recess, suitable for gripping by a hand. To enable the passenger to feel the door and the panel as one and the door as solid, the fastening element should be disposed in the region of the closing handle, where the greatest stress on the joint is generated. The distance at which the fastening element can be placed from the closing handle, whilst still maintaining a solid feel as the door is closed, depends on the dimensions of the vehicle door and the configuration of the handle.

Preferably, the arrangement comprises a second fastening element of the same type as the first fastening element, disposed on the panel at such a distance from the first fastening element that a sound securement of the panel to the door is obtained. A second fastening element contributes to the solid feel as the vehicle door is closed. The distance between the fastening elements is dependent on the dimensions of the vehicle door and the dimensions of and configuration of the closing handle.

In order further to fix the panel to the vehicle door, the arrangement can be provided with additional snap-fastening elements. These snap-fastening elements are preferably of a different type from that described above and comprise a first and a second joinable and separable part, the first part having a first member for securement in a first substrate and a cavity and the second part having a second member for securement in a second substrate and a protruding section for introduction and snap-fastening into the cavity of the first part, the first part being made of an elastic material. The second part can be made of a non-elastic matarial. The number of elastic fastening elements in the arrangement can vary. For example, they can be eight to ten in number, distributed over the panel and the vehicle surfaces. The elastic fastening element allows it to be fitted and removed several times over without being destroyed, which is not the case with conventional snap-fastening elements having the same snap-in and release function. The elastic fastening elements are more fully described in SE 0301972-6, filed on the same day.

The invention further relates to a process for securing a panel to a vehicle door, wherein a first part of a fastening element having a cavity and a groove connected to the cavity is fixed either to the door or the panel, a second part having a protruding part for introduction into the cavity in the first part is fixed to whichever of the panel or the door does not hold the first part, and a third part, having a resilient grip comprising two arms for introduction into the groove in the first part, is introduced into the groove in the first part and the second part is snapped into the cavity in the first part, whereupon the third part manages to lock the first part to the second part.

The invention also relates to a process for removing a panel from a base, in which the panel and the base are fixed together by means of at least one fastening element having a first part fixed to the door or panel, which first part has an axial direction and a transverse direction and an axially arranged cavity and, connected to the cavity, a transversely arranged groove, a second part fixed to whichever of the panel or the base does not hold the first part, which second part has an axial direction and a transverse direction and an axially protruding part which is introduced axially into the cavity in the first part, and a third part, having a resilient grip comprising two arms, which is introduced transversely into the groove in the first part, the third part locking the first part in the second part, wherein the third part is withdrawn transversely from the groove, after which the first and the second part are axially separated and the panel is thereby removed from the base.

The invention further relates to a process for re-securing a panel to a vehicle door, wherein a first part of a fastening element having a cavity and a groove connected to the cavity is fixed either to the door or the panel, a second part having a protruding part for introduction into the cavity in the first part, secured to whichever of the panel or door does not hold the first part, is brought together with and into the cavity in the first part, and a third part, having a resilient grip comprising two arms for introduction into the groove in the first part, is introduced into the groove in the first part, whereupon the third part manages to lock the first part to the second part.

### BRIEF DESCRIPTION OF DRAWINGS

Figure 1 shows the first part of the fastening element according to one embodiment of the invention.
Figure 2 shows a cross section of Figure 1 along the line II-II.
Figure 3 shows the second part of the fastening element according to one embodiment of the invention.
Figure 4 shows a cross section of Figure 3 along the line IV-IV.
Figure 5 shows the third part of the fastening element according to one embodiment of the invention, viewed in projection.
Figure 6 shows the third part of the fastening element according to one embodiment of the invention.
Figure 7 shows a cross section of Figure 6 along the line VII-VII.
Figure 8 shows an assembled fastening element according to one embodiment of the invention, viewed in projection.
Figure 9 shows a fastening element according to one embodiment of the invention, showing the parts separated, viewed in projection.
Figure 10 shows a cross section of the assembled fastening element in Figure 8.
Figure 11 shows diagrammatically a securement of a panel to a vehicle door.

### MODE(S) FOR CARRYING OUT THE INVENTION

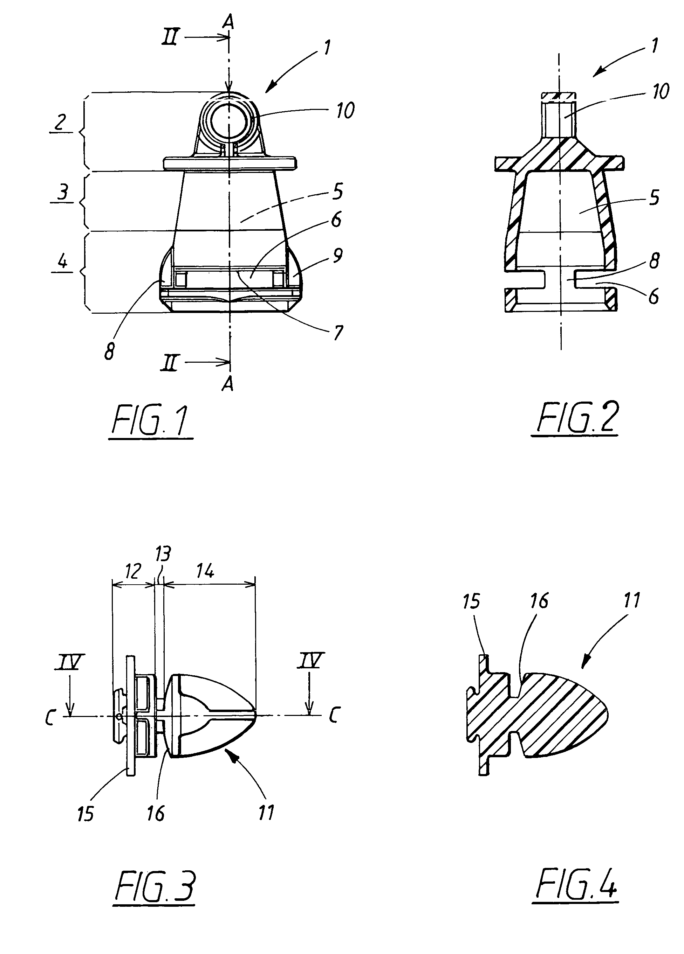

In Figure 1 can be seen the first part 1 of the fastening element. The first part has a substantially conical shape, having a first end section 2, a middle section 3 and a second end section 4. Other forms, such as a cylindrical shape, are also conceivable within the scope of the invention. The first part has an axial direction A-A and a transverse direction B-B perpendicular thereto. The first part 1 has a cavity 5 arranged with its longitudinal extent in the axial direction A-A, which cavity 5 is open toward the environment in the second end section 4, for introduction of the second part 11, and the first part 1 is therefore a female part. The cavity is disposed in both end and middle sections 2, 3, 4. The female part 1 further has a groove 6 disposed in the second end section 4 parallel with the transverse direction B-B. The groove 6 is constituted by a complete removal of material peripherally around the end section 4, except for two narrow tongues of material 8, 9. The first part is made, for example, of a plastics material, such as ABS. The first part can constitute an integral part of the panel, for example can be injection-moulded as one with the panel.

Figure 2 shows a longitudinal section of the first part 1, as shown in Figure 1, taken along the line II-II.

In Figure 3 is shown the second part 11 of the fastening element viewed from one side. The second part 11 has a substantially conical shape, an axial direction (C-C) and a transverse direction and having a first end section 12, a middle section 13 and a second end section 14. The first end section 12 has a peripheral flange 15. The flange 15 stops the introduction of the second part 11 into the first part 1 and its diameter is therefore greater than that of the cavity. The middle section 13 has a substantially smaller diameter than the surrounding parts of the end sections 12, 14. This waist section is intended to be borne against by the third part of the fastening element. On the second end section, facing the middle section, there is disposed a bevelled surface 16. The second part 11 of the fastening element is made, for example, of a plastics material, such as PA (polyamide). The second part 11 can constitute an integral part of the panel, for example can be injection-moulded as one with the panel.

The female part 1 and the male part 11 can be dimensioned such that they constitute a reference point for securement of a panel to a vehicle door. This means that they are tailored to fit snugly together such that very little slippage can occur between them. In an alternative embodiment, the female part 1 and the male part 11 can be dimensioned such that there is a clearance between them. This is to enable the fastening element to absorb tolerances (deviations from exact dimensions) which might be present in various parts forming part of the securing arrangement. According to this embodiment, the arrangement has a different reference point for securing the panel to the vehicle door. In the alternative embodiment, the female part, instead of having a circular cross section for the cavity 5, can have an oval cross section for the cavity 5. The male and female part are thereby able to slide against each other and absorb any tolerances which might appear in the construction parts to the arrangement.

Figure 4 shows a longitudinal section of the second part 11, as shown in Figure 3, taken along the line IV-IV.

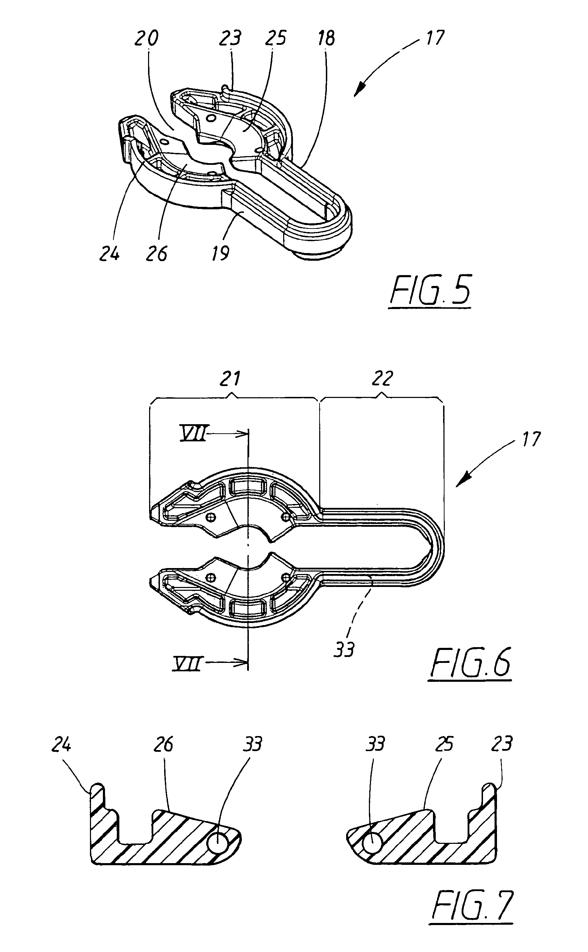

Figure 5 shows the third part 17 of the fastening element, viewed in projection. Figure 6 shows the third part 17 viewed from one side. The third part 17 has substantially a U-shape, viewed from one side, having two resilient legs 18, 19 with a gap 20 between them. The third part 17 has a first 21 and a second end section. In the second end section, the part 17 has a pure U-shape In the first end section 21, the legs 18, 19 have laterally protruding parts 23, 24, which mean that the first end section assumes a form which, in diagrammatic terms, is circular, viewed from one side. The protruding parts 23, 24 are intended for introduction into the groove 6 in the first part 1 and around the middle section 13 of the second part 11. The protruding parts 23, 24 have mutually facing bevelled surfaces 25, 26. These bevelled surfaces 25, 26 are intended to bear against the bevelled surface 16 of the second part 11. In case of possible fatigue in the material, the bevelled surfaces 16, 25, 26 will lock together the parts of the fastening element so that no play can occur between panel and door, something which would create a sense of insecurity in a user. The third part 17 is made, for example, of plastics material, such as POM (polyoxymethylene). In order to improve the resilient stability of the third part 17, a steel spring 33 is centrally encased in the third part.

Figure 7 shows a cross section of the third part 17, taken along the line VI-VI in the first end section 21 of the part.

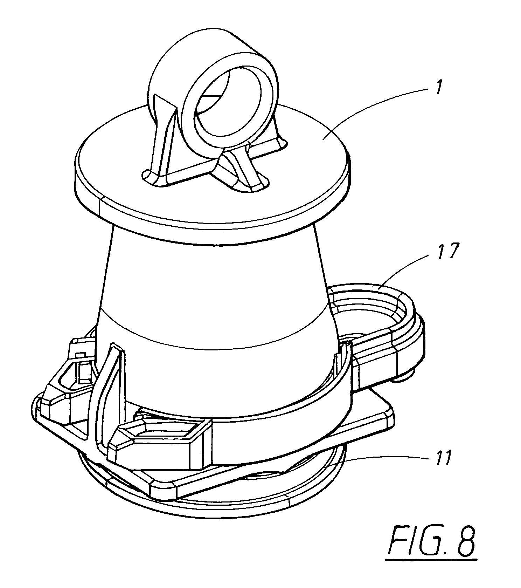

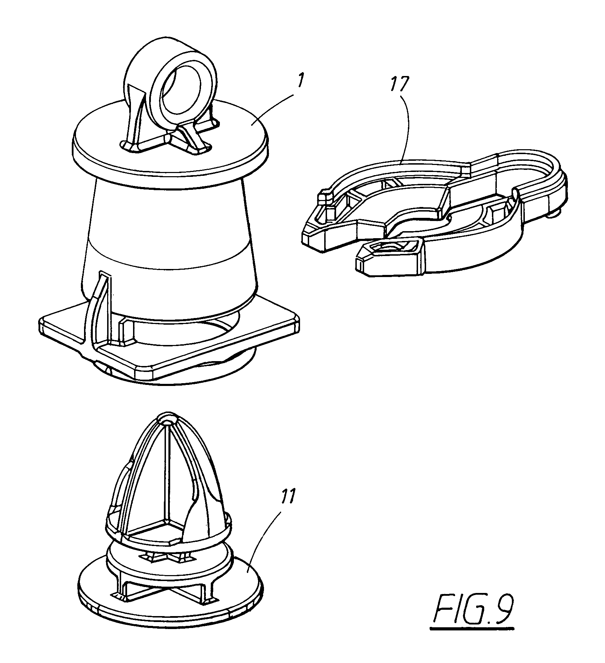

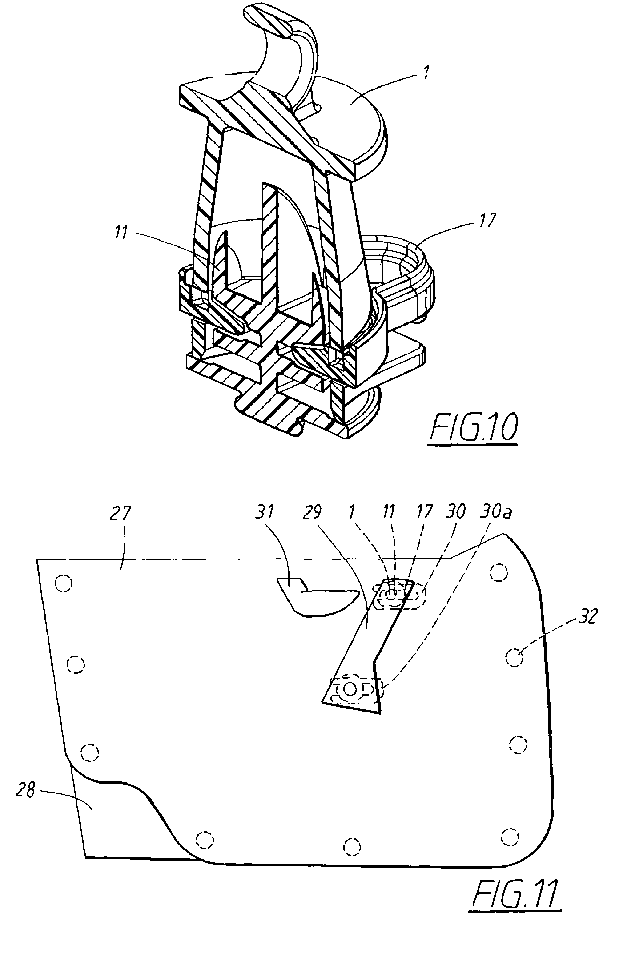

In Figure 8 can be seen the fastening element with its parts fixed together. Figure 9 illustrates the various parts separated. Figure 10 shows a longitudinal section of the assembled parts.

In Figure 11, a diagrammatic representation is given of the securement of a panel 27 to a vehicle door 28. The arrangement is shown from the side of the panel which faces in toward the vehicle, following completed fitting of the panel 27 to the door 28 and the door 28 to the vehicle. This side of the panel 27 has a closing handle 29 for closing the door 28. In the embodiment shown, the closing handle 29 consists of a handle in the shape of a bow. Other forms of the closing handle 29 are possible within the scope of the invention, for example a bowl or cup in the panel 27, constituting a gripping surface for closing of the door. In order to ensure that the door 28 feels solid when it is closed and in order to ensure that panel 27 and door 28 do not separate, a fastening element 30 according to the invention is disposed in the region of the two fixtures for the closing handle 29. The arrangement thus has two fastening elements 30. It is also possible to have a different number of fastening elements 30, such as one or three. A sound securement of the panel 27 to the door 28 has to be weighed, inter alia, against economic aspects. In this way, maximum strength is acquired in the joint and a solid feel obtained when the door is closed. The fastening element 30 according to the invention comprises the first 1, the second 11 and the third part 17 assembled as described above. The first part 1 has been fitted on the inside of the panel, i.e. the part which, in the ready-fitted door, faces in toward the arrangement, out of sight of external viewing. The third part 17 has been introduced into the groove 6 in the first part 1. The second part 11 has been fitted on the vehicle door 28. In the fitting of the panel 27 to the door 28, the second part 11 has been snapped into the first part 1 and has thereby been locked by the third part 17. Upon disassembly, the third part is withdrawn radially such that the second part 11 is released from the first part. Within the scope of the invention, the first 1 and the second part 11 can be fitted the other way round, i.e. the first part 1 can be fitted to the door 28 and the second part 11 to the panel 27.

The panel 27 has an opening handle 31 for opening the vehicle door. The arrangement also has a different type of fastening element. The second type of fastening element 32 is also itself a snap-fastening element. The joint with the second type of fastening element 32 is a weaker joint than that produced with the first type of fastening element 30. The second type of fastening element has only two parts and is missing the catch in the form of the third part 17 as exhibited by the fastening element 30 according to the first part. The fastening element of the second type 32 is also smaller in dimensions than the first type 30. The second type of fastening element 32 comprises a first and a second joinable and separable part, the first part being made of an elastic material and having a first member for securement in a first substrate and a cavity and the second part having a second member for securement in a second substrate and a protruding section for introduction into the cavity of the first part and snap-fastening therein. The second type of fastening element 32 is shown in Figure 11 as a dashed ring, since it is disposed on the inside of the panel 27. The arrangement comprises nine fastening elements 32 of the second type. A different number of fastening elements of the second type 32 is possible within the scope of the invention. In order to achieve a good securement of the peripheral parts of the panel 26, 8-10 fastening elements are preferably disposed in the periphery of the panel. The second type of fastening element 32 is preferably arranged with its elastic part fitted to the vehicle door and the protruding part to the panel 27. A seal is thereby obtained against water flowing between door and panel when a vehicle is used in, for example, rainy weather. In the fitting of the panel 27 to the door 28, the protruding part fitted in the panel 27 is therefore snapped into the elastic part fitted in the door 28. The second type of fastening element 32 is more fully described in our application SE 0301972-6, filed on the same day.

## Claims

1. Fastening element for securing a panel (27) to a vehicle door (28), **characterized in that** the fastening element comprises a first part (1), intended for fixing to the door (28) or the panel (27), having an axial direction (A-A) and a transverse direction (B-B) and an axially arranged cavity (5) and, connected to the cavity (5), a transversely arranged groove (6), a second part (11), intended for fixing to the door (28) or the panel (27), having an axial direction (C-C) and a transverse direction and an axially protruding part for introduction axially into the cavity (5) in the first part (1), and a third part (17), having a resilient grip comprising two arms (18, 19) for transverse introduction into the groove (6) in the first part (1), the third part (17) managing to lock the first part (1) in the second part (11).

2. Fastening element according to Claim 1, **characterized in that** the second part (11) of the fastening element has a waist section (13) intended for bearing contact against the third part (17), wherein the waist section (13) has a first bearing surface for bearing contact against the third part (17) and is surrounded by a second and a third bearing surface for bearing contact against the third part, the second bearing surface (16) being bevelled in the contact surface against the third part and the third part also having a corresponding bevel (25, 26) for bearing contact against the second part (11) so as to prevent play when these parts are stretched.

3. Fastening element according to Claim 1 or 2, **characterized in that** the third part (17) of the fastening element is configured in a plastics material with an embedded metal spring (33).

4. Arrangement for use in securing a panel (27) to a base (28), such as a vehicle door, comprising a base (28), a panel (27) and at least one fastening element (30) for securing the panel (27) to the base (28), **characterized in that** the fastening element (30) comprises a first part (1), fixed to either the panel (27) or the base (28), having an axial direction (A-A) and a transverse direction (B-B) and an axially arranged cavity (5) and, connected to the cavity, a transversely arranged groove (6), a second part (11), fixed to whichever of the panel (27) or the base (28) whereto the first part (1) is not fixed, which second part (11) has an axial direction (C-C) and a transverse direction and an axially protruding part for introduction axially into the cavity (5) in the first part (1), and a third part (17), having a resilient grip comprising two arms (18, 19) for transverse introduction into the groove (6) in the first part (1), the third part (17) managing to lock the first part (1) to the second part (11) and hence the panel (27) to the base (28).

5. Arrangement according to Claim 4, wherein the base (28) is a vehicle door and the panel (27) comprises an interior opening handle (31) for opening the door, which has been fitted on the vehicle door (28) prior to the fitting of the panel (27) to the vehicle door (28), an activating arm having an engagement surface disposed in a recess, which activating arm is pivotably fixed to the opening handle (31), a locking mechanism, and a power-transmitting member having a first part which is in contact with the activating arm and a second part which is in contact with the locking mechanism for the transmission of motion from the handle to the locking mechanism, the power-transmitting member, in the region of the part which is connected to the opening handle (31), having an engagement part, and a guide being provided for use in the connection to the opening handle (31), which guide, during the assembly, guides the power-transmitting member such that the engagement part is brought into line with the engagement surface in the recess.

6. Arrangement according to Claim 4 or 5, wherein the base (28) is a vehicle door, comprising a closing handle (29) for closing the vehicle door, the fastening element (30) being disposed in the region of the closing handle (29).

7. Arrangement according to Claim 6, **characterized in that** it comprises a second fastening element (30a) of the same type as the first fastening element, disposed on the panel (27) at such a distance from the first fastening element (30) that a sound securement of the panel (27) to the door (28) is obtained.

8. Arrangement according to any of Claims 4-7, wherein the base (28) is a vehicle door, the arrangement further comprising at least one fastening element (32) of a second type, which fastening element (32) is a snap-fastening element comprising a first and a second joinable and separable part, the first part being made of an elastic material and having a first member for securement in a first substrate and a cavity and the second part having a second member for securement in a second substrate and a protruding section for introduction into the cavity of the first part and snap-fastening therein.

9. Process for securing a panel to a base, wherein a first part of a fastening element having a cavity and a groove connected to the cavity is fixed either to the base or the panel, a second part having a protruding part for introduction into the cavity in the first part is fixed to whichever of the panel or the base does not hold the first part, and a third part, having a resilient grip comprising two arms for introduction into the groove in the first part, is introduced into the groove in the first part and the second part is snapped into the cavity in the first part, whereupon the third part manages to lock the first part to the second part.

10. Process for removing a panel from a base, in which the panel and the base are fixed together by means of at least one fastening element having a first part fixed to the door or panel, which first part has an axial direction and a transverse direction and an axially arranged cavity and, connected to the cavity, a transversely arranged groove, a second part fixed to whichever of the panel or the base does not hold the first part, which second part has an axial direction and a transverse direction and an axially protruding part which is introduced axially into the cavity in the first part, and a third part, having a resilient grip comprising two arms, which is introduced transversely into the groove in the first part, the third part locking the first part in the second part, wherein the third part is withdrawn transversely from the groove, after which the first and the second part are axially separated and the panel is thereby removed from the base.

11. Process for re-securing a panel to a base, wherein a first part of a fastening element having a cavity and a groove connected to the cavity is fixed either to the base or the panel, a second part having a protruding part for introduction into the cavity in the first part, secured to whichever of the panel or the base does not hold the first part, is brought together with and into the cavity in the first part, and a third part, having a resilient grip comprising two arms for introduction into the groove in the first part, is introduced into the groove in the first part, whereupon the third part manages to lock the first part to the second part.
